# EUROPEAN PATENT APPLICATION

(11) **EP 4 491 598 A1**
(43) Date of publication of application: **15.01.2025**
(21) Application number: 23184459.8
(22) Date of filing: 10.07.2023
(51) Int. Cl.: C04B 28/02, C04B 40/00

(54) **STABILIZING ADMIXTURE FOR MINERAL BINDER COMPOSITIONS**

(71) Applicant: Sika Technology AG, 6340 Baar (CH)
(72) Inventor: HELLER, Thomas, 74909 Meckesheim (DE); MASSHOLDER, Peter, 74927 Eschelbronn (DE); MÜLLER, Thomas, 69207 Sandhausen (DE); UNSELD, Johannes Otto, 38678 Clausthal-Zellerfeld (DE)
(74) Representative: Sika Patent Attorneys

(57) **Abstract**

An admixture for mineral binder compositions, comprising, with respect to the overall weight of the admixture:
a) 0.1 - 30 wt.%, especially 5 - 25 wt.%, in particular 10 - 20 wt.%, of an alkali swellable polymer;
b) 0 - 45 wt.%, preferably 1 - 40 wt.%, more preferably 5 - 35 wt.%, still more preferably 10 - 22 wt.%, in particular 14 - 19 wt.%, of a defoamer;
c) 0 - 25 wt.%, preferably 0.01 - 25 wt.%, especially 0.05 - 5 wt.%, in particular 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 0 - 75 wt.%, especially 10 - 60 wt.% of water, in particular 20 - 40 wt.% of water;
whereby at least one of the defoamer and the surfactant is present with a proportion > 0 wt.%.

## Description

### Technical field

The invention relates to an admixture for mineral binder compositions. Further aspects of the invention are directed to a method for producing an admixture and a mineral binder composition comprising an admixture. Also, the invention is concerned with a use of an admixture for reducing segregation and/or bleeding of the mineral binder composition, and with the use of an admixture as an air entrainer and/or as an air void stabilizer in a mineral binder composition.

### Background art

"Bleeding" of mineral binder compositions refers to the phenomenon where water or excess mixing water in freshly mixed mineral binder compositions, e.g. concrete, rises to the surface. It is characterized by the appearance of a thin layer of water on the surface of the mineral binder composition, which separates from the solid material and forms a water film.

Bleeding usually occurs due to the settlement of solid particles within the mineral binder composition or the segregation of solids and water, respectively. When a mineral binder composition is mixed, it typically contains a combination of cement, aggregates (such as sand and gravel), water, and various admixtures. During the mixing and placing process, the solid particles settle due to their weight, causing water to rise to the surface. Some of the negative impacts of this process include surface defects, such as pitting, scaling, or an uneven appearance; reduced strength and durability caused by an imbalance in the water to binder ratio; increased drying time, which can delay subsequent construction activities.

Several factors contribute to concrete bleeding. Inter alia, some admixtures, like water-reducing admixtures or plasticizers, can increase the likelihood of bleeding by improving workability and reducing viscosity. This is in particular an issue with mineral binder compositions having a high flowability what usually is achieved by using high proportions of superplasticizers.

To prevent bleeding and segregation of mineral binder compositions, it is known to use stabilizers in the form of viscosity modifiers. However, many of these solutions are not suitable for stabilizing mineral binder compositions having high flowabilities, such as for example self-compacting concrete compositions. Many of the known stabilizers also cannot stop bleeding sufficiently and/or they reduce the flowability excessively. Also, many of the known stabilizers or viscosity modifiers are solid and thus must be weighed and added manually what is error prone.

Likewise, mineral binder compositions having an increased air content, such as e.g. mineral foams or foamed concrete, need to be stabilized with respect to the content and distribution the air voids. Usually, air entraining admixtures are used to introduce air voids. However, there are potential problems associated with their use. Inter alia, air entrainers can exacerbate bleeding and segregation in mineral binder compositions. This is because air voids can interfere with the settling of solid particles, leading to an increased tendency for water to rise to the surface and for aggregates to separate from the mineral binder.

There is thus still a need to develop new and improved solutions, which reduce or overcome the aforementioned drawbacks.

### Disclosure of the invention

It is an object of the present invention to provide solutions that allow to overcome the above mentioned drawbacks at least partly. In particular, admixtures should be provided which allow stabilizing mineral binder compositions. Thereby, the admixture should allow reducing bleeding and/or segregation, in particular in highly fluid mineral binder compositions, such as for example self-compacting concretes. Furthermore, it would be desirable if the admixture allows for entraining defined amounts of air and/or stabilizing air voids in mineral binder compositions having an increased air content, such as e.g. mineral foams or foamed concrete.

Surprisingly, it has been found that the problem of the invention can be solved by an admixture according to claim 1. Thus, the main aspect of the invention is related to an admixture for mineral binder compositions, the admixture, with respect to the overall weight of the admixture, comprising:
a) 0.1 - 30 wt.%, especially 5 - 25 wt.%, in particular 10 - 20 wt.%, of an alkali swellable polymer;
b) 0 - 45 wt.%, preferably 1 -40 wt.%, more preferably 5 - 35 wt.%, still more preferably 10 - 22 wt.%, in particular 14 - 19 wt.%, of a defoamer;
c) 0 - 25 wt.%, preferably 0.01 - 25 wt.%, especially 0.05 - 5 wt.%, in particular 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 0 - 75 wt.%, especially 10 - 60 wt.%, in particular 20 - 40 wt.% of water;
whereby at least one of the defoamer and the surfactant is present with a proportion > 0 wt.%.

As has been shown, admixtures according to the invention allow for stabilizing highly fluid mineral binder compositions, such as e.g. self-compacting concrete compositions, having a large flow table spread, measured according to EN 12350-5:2019 of for example up to 700 mm or more as required by German standards for self-compacting concrete. Thereby, bleeding and segregation can be reduced significantly or it can be prevented completely. At the same time, when the admixture is formulated with the defoamer, the admixture does not introduce significant proportions of air and helps to deaerate the mineral binder composition to an air content in the range of 0 - 2 vol.% (measured according to DIN EN 12350-7:2022-05).

Also, the admixture according to the invention can be used as an aid to recover segregated mineral binder compositions, e.g. mineral binder composition having been prepared with excessive water and/or with a too high dosage of plasticizer.

The admixture according to the invention furthermore can be used as an anti-washout admixture for any kind of underwater compositions, such as e.g. underwater concrete. Thereby, the stability, cohesion and robustness of mineral binder compositions being placed and hardened underwater are improved.

As has been shown, admixtures according to the invention can be provided in liquid form, which makes handling and dosing easier. In particular, the admixture can be formulated as a fully pumpable liquid, which greatly simplifies automatic dosing.

Also, if the admixture is formulated with low amounts or no defoamer at all, it is suitable for entraining air and/or stabilizing air voids in mineral binder compositions having an increased air content, such as e.g. mineral foams or foamed concrete.

Thus, the admixture can be adjusted to specific needs in a rather easy manner, especially by adjusting the proportions of the defoamer and/or the surfactant.

With respect to applications, the admixture according to the invention can be used for a wide variety of different mineral binder compositions, such as, for example, mortars, concrete, shotcrete, grouts, self-compacting mineral binder compositions, gypsum compositions, bored pile concrete and the like. Thereby, the mineral binder compositions can be based on different mineral binders, e.g. cement and/or gypsum.

Further aspects of the invention are the subject matter of other independent claims. Especially preferred embodiments of the invention are outlined throughout the description or the subject matter of the dependent claims.

### Ways of carrying out the invention

A first aspect of the invention relates to an admixture for mineral binder compositions, the admixture, with respect to the overall weight of the admixture, comprising:
a) 0.1 - 30 wt.%, especially 5 - 25 wt.%, in particular 10 - 20 wt.%, of an alkali swellable polymer;
b) 0 - 45 wt.%, preferably 1 -40 wt.%, more preferably 5 - 35 wt.%, still more preferably 10 - 22 wt.%, in particular 14 - 19 wt.%, of a defoamer;
c) 0 - 25 wt.%, preferably 0.01 - 25 wt.%, especially 0.05 - 5 wt.%, in particular 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 0 - 75 wt.%, especially 10 - 60 wt.% of water, in particular 20 - 40 wt.% of water;
whereby at least one of the defoamer and the surfactant is present with a proportion > 0 wt.%.

If the admixture is intended for reducing segregation and/or bleeding of the mineral binder composition and/or as an anti-washout admixture, the admixture preferably comprises the defoamer with a proportion of 1 - 25 wt.%, especially 10 - 22 wt.%, in particular 14 - 19 wt.%.

On the other hand, if the admixture is intended as an air entrainer and/or as an air void stabilizer in a mineral binder composition, the admixture preferably comprises the surfactant with a proportion of 0.01 - 25 wt.%, especially 0.5 - 5 wt.%, in particular 0.1 - 1 wt.%, and the admixture preferably comprises less than 1 wt.% of the defoamer, especially less than 0.1 wt.% of the defoamer, preferably no deformer at all is present.

"Alkali swellable polymer" in particular refers to carboxylic functional copolymers that under acidic conditions are compacted, e.g. coiled, and when neutralized can thicken in water to act as a thickening agent. Specifically, alkali swellable polymers thicken via water absorption and swelling and they rely on a change from low to high pH to trigger such thickening. At low pH the copolymers are insoluble in water but upon neutralization and at high pH become soluble and thicken.

Alkali swellable polymers can for example be produced by free-radical emulsion polymerization of ethylenically unsaturated monomers.

Alkali swellable polymers are preferentially copolymers of (meth)acrylic acid and esters of (meth)acrylic acid. The copolymers of (meth)acrylic acid and esters of (meth)acrylic acid may have a content of further monomeric units such as propylene, butadiene, styrene, vinyl chloride, vinyl alcohol and/or esters of vinyl alcohol such as vinyl acetate.

The alkali-swellable polymers can also be hydrophobically modified. This is typically done by incorporation of a small number of hydrophobic macromonomers into the polymer. Such macromonomers are for example esters of (meth)acrylic acid with hydrophobic alcohols, esters of (meth)acrylic acid with alkylene oxides that are further esterified with fatty acids, derivatives of styrene and/or non-ionic surfactants.

Hydrophobic alcohols are for example fatty acid alcohols, especially having 6-40 carbon atoms, in particular 12 - 32 carbon atoms. Fatty acids in particular have 6 - 40 carbon atoms, especially 12 - 32 carbon atoms. Alkylene oxides are in particular selected from ethylene oxide, propylene oxide and/or butylene oxide, especially ethylene oxide and/or propylene oxide.

Thus, in a further preferred embodiment, the alkali swellable polymer is a hydrophobically modified alkali swellable polymer comprising hydrophobic macromonomers.

A molar ratio of the (meth)acrylic acid to the esters of (meth)acrylic acid in the copolymer in particular is from 0.1 to 10, especially 0.5 to 2, in particular 0.8 to 1.2, for example 0.95 to 1.05. Especially the molar ratio is 1.

Most preferred within the context of the present invention are copolymers of methacrylic acid and acrylate esters, in particular in a molar ratio of 1:1. They are thus polymers carrying anionic charges.

Especially, the alkali swellable polymer comprises the following subunits (I) and (II) or it consists thereof: 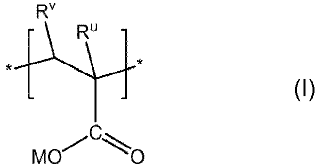 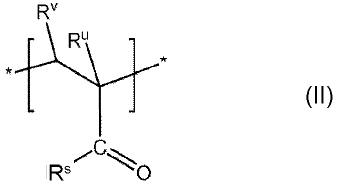 whereby,
each R^{v} stands for H,
each R^{u}, independently of the others, stands for hydrogen or a methyl group,
M, independently of one another, represents H, an alkali metal ion, alkaline earth metal ion, a bi- or trivalent metal ion, an ammonium ion or an organic ammonium group;
each R^{s}, independently of the others, stands for: -O-[A-O]ₙ-C(O)-R^{t} or -O-R^{t},
with n = 1 - 10, A = C₂ and/or Cs alkylene, and R^{t} = C₆ to C₄₀, especially C₁₂ to C₃₂, alkyl group, cyclohexyl group or alkylaryl group.

In subunit (I), Rᵤ preferably is a methyl group whereas in subunit (II) Rᵤ preferably is a H.

A molar ratio of subunit (I) to subunit (II) in the copolymer in particular is from 0.1 to 10, especially 0.5 to 2, in particular 0.8 to 1.2, for example 0.95 to 1.05. Especially the molar ratio is 1.

Typically, the alkali swellable polymers have a high molecular weight, which can be in the range of Mₙ between 10'000 - 10'000'000 g/mol, preferably 10'000 - 1'000'000 g/mol, especially 30'000 - 500'000.

The glass transition temperature (Tg) of such alkali swellable polymers is not particular limited and may vary in a wide range. The Tg as measured according to ASTM D3418 can be in a range of from -20 °C to +90 °C.

Mixtures of two or more alkali swellable polymers are also possible.

It is especially preferred that alkali swellable polymers are employed as aqueous emulsions - also called ASE (alkali soluble/swellable polymer emulsion). Likewise, hydrophobically modified alkali-swellable polymers are preferentially employed as aqueous emulsions - also called HASE (hydrophobically-modified alkali soluble polymer emulsion).

Preferred ASE or HASE have a solids content of 10 - 40 wt.-%, especially of 25 - 35 wt.-%.

Thus, the alkali swellable polymer in a preferred embodiment is employed in the form of an aqueous emulsion, preferably having a solid content of 10 - 40 wt.%, especially 25 - 35 wt.%, with respect to the weight of the emulsion employed.

Preferably, the emulsion further comprises another surfactant, especially an anionic surfactant, especially an ethoxylated fatty alcohol sulfate, for example an ethoxylated C₁₀ - C₁₅ fatty alcohol sulfate. A proportion of the further surfactant with respect to the total weight of the emulsion is for example 0.5 - 5 wt.%, especially 1 - 3 wt.%.

A pH of the emulsion preferably is in the range of 1 - 5, especially 2 - 4, in particular 2.5 - 3.5.

Preferably, alkali swellable polymers or emulsions comprising the alkali swellable polymers within the present context show effective thickening at pH >5, more preferably at pH >7, especially at pH >8.

Suitable ASE and HASE are for examples available from Dow Chemical under the brand name Acrysol, from Nippon Shokubai under the brand name Acryset, from Münzing Chemie under the brand name Tafigel, or from BASF under the brand name Rheovis.

A "defoamer" is an anti-foam agent to control or reduce the formation of foam during mixing of the mineral binder composition. Thereby, especially, air pores in the mix are destabilized and reduced.

The defoamer preferably is selected from one more of the following compounds: phosphoric acid esters, such as, for example, tributyl phosphate and/or triisobutyl phosphate; polyalkylene glycols, such as, for example, polypropylene oxides, block copolymers containing ethylene oxide, propylene oxides or butylene oxides; mineral oils and/or vegetable oils; fatty acid, fatty acid esters, fatty alcohols, alkoxylated fatty acids or fatty alcohols; silicones, silicone esters.

According to a highly preferred embodiment, the defoamer is selected from tributyl phosphate and/or triisobutyl phosphate, especially triisobutyl phosphate.

The term "surfactant" designates surface tension lowering substances. Surfactants are usually organic compounds containing both hydrophobic and hydrophilic groups. Based on the charge of the hydrophilic group the surfactants are classified to anionic, cationic, amphoteric, non-ionic surfactants.

The surfactant of the admixture is chemically and/or physically different from the defoamer and the alkali swellable polymer.

Most preferred the surfactant is an anionic surfactant and/or a non-ionic surfactant.

Especially, the surfactant comprises an anionic surfactant selected from amino acid derivatives; fatty alcohol ether sulfates; fatty alcohol sulfates; soaps; alkyl phenol ethoxylates; fatty alcohol ethoxylates; alkanesulfonates; olefinsulfonates; and/or alkyl phosphates.

In another preferred embodiment, the surfactant comprises an non-ionic surfactant selected from ethoxylates, such as, for example, ethoxylated adducts of alcohols, such as polyoxyalkylene polyols; amines; fatty acids; fatty acid amides; alkylphenols; ethanolamides; fatty amines; polysiloxanes; fatty acid esters; alkyl or alkylphenyl polyglycol ethers, such as, for example, fatty alcohol polyglycol ethers; alkylglycosides; sugar esters; sorbitan esters; polysorbates or trialkylamine oxides; esters and amides of poly(meth)acrylic acids with polyalkylene glycols or aminopolyalkylene glycols, which at most may be tacked at one end with alkyl groups.

Combinations of these anionic and non-ionic surfactants can be used as well.

Preferentially, the surfactant comprises or is a non-ionic surfactant, especially a fatty acid polyglycol ester.

The optional one or more processing additives in particular comprises a biocide, especially selected form isolthiazolinone derivatives; Triazoles; iodine compounds; dithiocarbamates; triazine derivatives; urea derivatives; and/or metal compounds.

The one or more processing additives is/are chemically and/or physically different from the alkali swellable polymer, the defoamer and the surfactant.

In particular, a pH of the admixture, before adding it to a mineral binder composition, is < 7, in particular < 5, especially < 4. This helps to achieve a long shelf-life. i.e. a shelf life of at least several weeks or at least several months.

Especially, the admixture is present in liquid form.

A first highly preferred admixture comprises:
a) 0.1 - 30 wt.%, especially 5 - 25 wt.%, in particular 10 - 20 wt.%, of an alkali swellable polymer;
b) 1 - 40 wt.%, preferably 5 - 35 wt.%, more preferably 10 - 22 wt.%, in particular 14 - 19 wt.%, of a defoamer;
c) 0 - 25 wt.%, preferably 0.01 - 25 wt.%, especially 0.05 - 5 wt.%, in particular 0.1 - 1 wt.%, of a surfactant, especially an anionic surfactant and/or an nonionic surfactant;
d) 0 - 10 wt.%, preferably 0.001 - 10 wt.%, especially 0.01 - 5 wt.%, in particular 0.1 - 3 wt.%, of one or more processing additives;
e) 10 - 60 wt.% of water, in particular 20 - 40 wt.% of water.

A second highly preferred admixture comprises:
a) 5 - 25 wt.%, in particular 10 - 20 wt.%, of an alkali swellable polymer;
b) 10 - 22 wt.%, in particular 14 - 19 wt.%, of a defoamer;
c) 0.05 - 5 wt.%, in particular 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 10 - 60 wt.% of water, in particular 20 - 40 wt.% of water.

A third highly preferred admixture comprises:
a) 10 - 20 wt.%, of an alkali swellable polymer;
b) 14 - 19 wt.%, of a defoamer;
c) 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 20 - 40 wt.% of water.

The above described highly preferred compositions art highly beneficial when the admixture is used for reducing segregation and/or bleeding of the mineral binder composition and/or as an anti-washout admixture.

A fourth highly preferred admixture comprises:
a) 0.1 - 30 wt.%, especially 5 - 25 wt.%, in particular 10 - 20 wt.%, of an alkali swellable polymer;
b) less than 1 wt.%, especially less than 0.1 wt.% of a defoamer, preferably no deformer at all;
c) 0.01 - 25 wt.%, especially 0.05 - 5 wt.%, in particular 0.1 - 1 wt.%, of a surfactant, especially an anionic surfactant and/or a nonionic surfactant;
d) 0 - 10 wt.%, preferably 0.001 - 10 wt.%, especially 0.01 - 5 wt.%, in particular 0.1 - 3 wt.%, of one or more processing additives;
e) 10 - 60 wt.% of water, in particular 20 - 40 wt.% of water.

Such a composition is highly beneficial when the admixture is used as an air entrainer and/or as an are void stabilizer.

A further aspect of the present invention is directed to a method for producing an admixture according to the invention comprising the steps of:
- Providing an aqueous emulsion of the alkali swellable polymer, preferably having a solid content of 10 - 40 wt.%, especially 25 - 35 wt.%, with respect to the weight of the emulsion;
- Mixing the aqueous emulsion of the alkali swellable polymer with the defoamer and/or the surfactant;
- Optionally adding the one or more processing additives;
- Optionally adding the water.

Thereby, the aqueous emulsion of the alkali swellable polymer preferably is an ASE or HASE as described above.

The aqueous emulsion, the alkali-swellable polymer, the defoamer, the surfactant, and the one or more processing additives are configured as described above.

Especially, a pH of the aqueous emulsion is in the range of 1 - 5, especially 2-4, in particular 2.5 - 3.5.

This method is highly beneficial since the alkali swellable polymer can be provided in a stable and well admixable form, such that a homogeneous and stable admixture can be obtained.

However, admixtures according to the invention can be produced differently, if desired, e.g. by mixing all of the components providing the alkali-swellable polymer in the form of an emulsion.

Another aspect of the present invention is related to a mineral binder composition comprising a mineral binder and an admixture as described above.

A "mineral binder composition" as used in the context of the present invention refers to a mixture comprising at least one mineral binder. It is possible, and in the context of the present invention also preferred, that the mineral binder composition additionally comprises aggregates and/or other additives. A mineral binder composition of the present invention can be essentially free of water and be present in dry form. A mineral binder composition of the present invention can likewise comprise part or all of the mixing water and be present as a fluid or in stiffened form.

A "mineral binder" within the context of the present invention is a binder, in particular an inorganic binder, which reacts in the presence of water in a hydration reaction to solid hydrates or hydrate phases. This may be, for example, a hydraulic binder (e.g. cement or hydraulic lime), a latent hydraulic binder (e.g. slag or blast furnace slag), a pozzolanic binder (e.g. fly ash, trass or rice husk ash), or a non-hydraulic binder (gypsum or white lime). Mixtures of the various binders are also possible.

In particular, the mineral binder comprises a hydraulic binder, preferably cement. Particularly preferred is a cement with a cement clinker content of ≥ 35 wt.-%. Preferably, the cement is of the type CEM I, CEM II, CEM III, CEM IV, CEM V (according to standard EN 197-1) or a calcium aluminate cement (according to the standard EN 14647:2006-01) or a calcium sulphoaluminate cement or a mixture thereof. In particular, the cement is of the type CEM I, CEM II, calcium sulphoaluminate cement or a mixture thereof. Of course, cements produced according to relevant alternative standards, for example the relevant ASTM or Chinese standards, are likewise suitable. Furthermore, white cement can be used as a mineral binder of the present invention.

A proportion of the hydraulic binder in the total mineral binder is preferably at least 5 wt .-%, more preferably at least 20 wt .-%, still more preferably at least 35 wt .-%, in particular at least 65 wt .-%. According to a further advantageous embodiment, the mineral binder consists of at least 95% by weight of hydraulic binder, in particular of cement.

However, it can also be advantageous if the mineral binder comprises other binders in addition to or instead of a hydraulic binder. These are in particular latent hydraulic binders and/or pozzolanic binders. Suitable latent hydraulic and/or pozzolanic binders are e.g. slag, fly ash and/or silica fume.

Likewise, the binder composition may include inert substances such as e.g. limestone powder, quartz powder and/or pigments.

According to embodiments the mineral binder additionally comprises up to 40 wt.-%, preferably up to 35 wt.-%, especially up to 20 wt.-%, each based on the total dry weight of the mineral binder, of a calcium sulfate. The calcium sulfate may be present in the form of calcium sulfate-hemihydrate, calcium sulfate-dihydrate and/or anhydrite. In an especially advantageous embodiment, the calcium sulfate is interground with the hydraulic binder, especially the cement.

Preferably, the mineral binder composition of the present invention comprises aggregates. Aggregates can be any material that is non-reactive in the hydration reaction of mineral binders. Aggregates can be any aggregate typically used for mineral binder compositions, especially cementitious binder compositions. Typical aggregates are for example rock, crushed stone, gravel, slag, sand, especially quartz sand, river sand and/or manufactured sand, recycled concrete, glass, expanded glass, pumice, perlite, vermiculite, and/or fine aggregates such as ground limestone, ground dolomite, ground aluminum oxide, silica fume, quartz flour and/or ground steel slag. Aggregates useful for the present invention can have any shape and size typically encountered for such aggregates.

Preferably, the mineral binder composition of the present invention comprises at least one fine aggregate, especially ground limestone. Aggregates, useful for the present invention, are as described for example in EN 12620:2008-07 and EN13139:2015-07. Aggregates typically are characterized by their particle size distribution which can be measured by sieve analysis as set out in methods ASTM C136 and C117.

The particle size of the aggregates depends on the application and for example is in the range of 0 - 32 mm and more, especially 0.1 mm to 32 mm. Aggregate with different particle sizes are preferably mixed in order to optimize the properties of the mineral binder composition. It is also possible to use aggregates of different chemical composition.

According to embodiments, the mineral binder composition of the present invention comprises up to 85 wt.-%, preferably 30 - 80 wt.-%, more preferably 40 - 70 wt.-%, each based on the total weight of the mineral binder composition, of aggregates, preferably of sand, especially of quartz sand, and/or of a fine carbonate, especially of a fine calcium carbonate and/or magnesium carbonate.

According to embodiments, a mineral binder composition of the present invention comprises a superplasticizer selected from the group consisting of lignosulfonates, sulfonated vinylcopolymers, polynaphthalene sulfonates, sulfonated melamine formaldehyde condensates, polyethylene oxide phosphonates, polycarboxylate ethers (PCE), or mixtures thereof. Preferably, a mineral binder composition of the present invention comprises a PCE.

According to embodiments, the PCE comprises carboxylic acid groups in the form of free, that is not neutralized, carboxylic acid groups and/or in the form of their alkali and / or alkaline earth metal salts. Preference is given to a PCE, which, apart from the carboxylic acid groups, no longer has any further anionic groups. Further preferred is a PCE whose side chains consist of at least 80 mol%, preferably at least 90 mol%, especially preferably 100 mol%, of ethylene glycol units. Preferably, the side chains have an average molecular weight Mw in the range of 500 to 10'000 g/mol, preferably 800 to 8'000 g/mol, especially preferably 1'000 to 5'000 g/mol. Side chains of different molecular weights may also be present in the PCE. Most preferably, the PCE is composed of (meth)acrylic acid and methyl polyalkylene glycol (meth)acrylates.

The PCE preferably has an average molecular weight Mw of 8'000 to 200'000 g/mol, especially 10'000 to 100'000 g/mol, measured against PEG standards.

According to embodiments an admixture of the present invention is added to the dry mix of a mineral binder composition. A "dry mix" within the present context refers to a mineral binder composition with a moisture content of not more than 0.5 wt.-%, based on the total weight of the mineral binder composition.

According to further embodiments, an admixture of the present invention is added to a mineral binder composition together with the mixing water and/or after adding the mixing water.

A weight ratio of water to mineral binder for mixing the mineral binder composition in particular is from 0.25 - 0.9, especially 0.3 - 0.6.

With respect to the mineral binder in the mineral composition, a proportion of the admixture is from 0.001 - 10 wt.%, especially 0.01 - 5 wt.%, in particular 0.1 - 2 wt.%.

According to a special embodiment, the mineral binder composition is a self-compacting mineral binder composition, especially a self-compacting concrete (SCC). A self-compacting mineral binder composition does not require vibration for placing and compaction. It is able to flow under its own weight, completely filling formwork and achieving full compaction, even in the presence of congested reinforcement.

Especially the self-compacting mineral binder composition has a flow table spread, measured according to EN 12350-5:2019 of at least 500 mm, especially at least 600 mm, in particular at least 700 mm.

A further aspect of the present invention is directed to the use of an admixture as described above for reducing segregation and/or bleeding of the mineral binder composition, especially of a self-compacting mineral binder composition. Thereby, in particular, the admixture comprises the defoamer, in particular with a proportion of 1 - 40 wt.%, preferably 5 - 35 wt.%, more preferably 10 - 22 wt.%, in particular 14 - 19 wt.%. Further components of the admixture as described above may also be present.

Furthermore, the present invention is concerned with the use of the admixture as described above as an anti-washout agent, especially for underwater mineral binder compositions, in particular underwater concrete. Thereby, in particular, the admixture comprises the defoamer, in particular with a proportion of 1 - 40 wt.%, preferably 5 - 35 wt.%, more preferably 10 - 22 wt.%, in particular 14 - 19 wt.%. Further components of the admixture as described above may also be present.

Anti-washout agents typically increase the stability, cohesion and robustness of mineral binder compositions. Especially, anti-washout agents (i) reduce or prevent the washout of mineral binder, aggregates and/or fines from the mineral binder compositions; (ii) impede the blending of external water into the mineral binder composition, and/or (iii) reduce segregation, even with highly fluid mineral binder compositions having a high water-to-mineral binder ratio.

A still further aspect of the invention is directed to the use of an admixture as describe above as an air entrainer and/or air void stabilizer in a mineral binder composition. Thereby, in particular, the admixture comprises less than 1 wt.% of the defoamer, especially less than 0.1 wt.% of the defoamer, preferably no deformer at all is present; and at the same time the surfactant is present with a proportion of 0.01 - 25 wt.%, especially 0.5 - 5 wt.%, in particular 0.1 - 1 wt.%. Further components of the admixture as described above may also be present.

For example, this allows for producing concretes with an air content of 15 - 25 vol.%.

With the above described uses, the admixture, with respect to the mineral binder in the mineral composition, preferably is used with proportions from 0.001 - 10 wt.%, especially 0.01 - 5 wt.%, in particular 0.1 - 2 wt.%.

Further advantageous embodiments and combinations of features of the invention will emerge from the following exemplary embodiments and the totality of the patent claims.

### Exemplary embodiments

### Admixture

A liquid admixture **A1** according to the invention was produced by providing an aqueous emulsion of an alkali-swellable acrylate polymer (solid content: 31%; stabilized with ethoxylated C13-alcohol sulfate) and mixing the emulsion with a defoamer (triisobutyl phosphate), an anionic surfactant (fatty acid polyglycol ester), processing additive (biocide) and water with the proprotions indicated in table 1.

**Table 1: Admixture according to the invention.**

| **Component** | **A1 [wt.%]** |
|---|---|
| Aqueous emulsion of an alkali-swellable acrylate polymer | 50 |
| Defoamer | 17 |
| Anionic surfactant | 0.5 |
| Water | 31 |
| Processing additive (biocide) | 1.5 |

### Tests with self-compacting concrete

Admixture **A1** was used as a stabilizer in an ordinary cement-based self-compacting concrete composition that was adjusted to a flow table spread of about 700 mm (measured according to EN 12350-5:2019). A proportion of admixture **A1** with respect to the content of the cement in the concrete was 0.3 wt.%. The admixture **A1** was added together with the mixing water.

Visual inspection of the concrete during placing and hardening has shown that bleeding and segregation could be prevented efficiently.

In comparative tests without admixture **A1**, strong bleeding and segregation of the self-compacting concrete was observed. Also, when using common commercial stabilizers, bleeding could not be prevented at the same level as with admixture **A1** according to the invention.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. Admixture for mineral binder compositions, the admixture, with respect to the overall weight of the admixture, comprising:
a) 0.1 - 30 wt.%, especially 5 - 25 wt.%, in particular 10 - 20 wt.%, of an alkali swellable polymer;
b) 0 - 45 wt.%, preferably 1 - 40 wt.%, more preferably 5 - 35 wt.%, still more preferably 10 - 22 wt.%, in particular 14 - 19 wt.%, of a defoamer;
c) 0 - 25 wt.%, preferably 0.01 - 25 wt.%, especially 0.05 - 5 wt.%, in particular 0.1 - 1 wt.%, of a surfactant, especially an anionic surfactant and/or a non-ionic surfactant;
d) 0 - 10 wt.%, preferably 0.001 - 10 wt.%, especially 0.01 - 5 wt.%, in particular 0.1 - 3 wt.%, of one or more processing additives;
e) 0 - 75 wt.%, especially 10 - 60 wt.%, in particular 20 - 40 wt.% of water;
whereby at least one of the defoamer and the surfactant is present with a proportion > 0 wt.%.

2. Admixture according to claim 1 wherein the alkali swellable polymer is a copolymer of (meth)acrylic acid and esters of (meth)acrylic acid, optionally comprising further monomeric units such as propylene, butadiene, styrene, vinyl chloride, vinyl alcohol and/or esters of vinyl alcohol such as vinyl acetate.

3. Admixture according to any of preceding claims, wherein the alkali swellable polymer is a hydrophobically modified alkali swellable polymer comprising hydrophobic macromonomers, whereby the hydrophobic macromonomers are selected from esters of (meth)acrylic acid with hydrophobic alcohols, esters of (meth)acrylic acid with alkylene oxides that are further esterified with fatty acids, derivatives of styrene and/or non-ionic surfactants.

4. Admixture according to any of claims 2-3, wherein a molar ratio of the (meth)acrylic acid to the esters of (meth)acrylic acid in the copolymer is from 0.8 to 1.2, for example 0.95 to 1.05.

5. Admixture according to any of preceding claims, wherein the alkali swellable polymer comprises the following subunits (I) and (II): 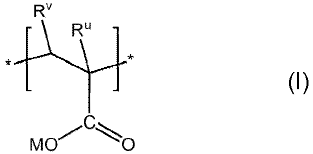 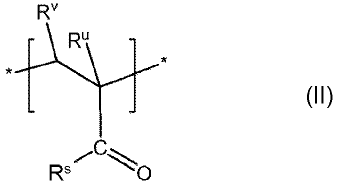 whereby,
each R^{v} stands for H,
each R^{u}, independently of the others, stands for hydrogen or a methyl group,
M, independently of one another, represents H, an alkali metal ion, alkaline earth metal ion, a bi- or trivalent metal ion, an ammonium ion or an organic ammonium group,
each R^{s}, independently of the others, stands for: -O-[A-O]ₙ-C(O)-R^{t} or -O-R^{t}, with n = 1 - 10, A = C₂ and/or C₃ alkylene, and R^{t} = C₆ to C₄₀, especially C₁₂ to C₃₂, alkyl group, cyclohexyl group or alkylaryl group.

6. Admixture according to any of preceding claims, wherein the defoamer is selected from one or more of the following compounds: phosphoric acid esters, such as, for example, tributyl phosphate and/or triisobutyl phosphate; polyalkylene glycols, such as, for example, polypropylene oxides, block copolymers containing ethylene oxide, propylene oxides or butylene oxides; mineral oils and/or vegetable oils; fatty acid, fatty acid esters, fatty alcohols, alkoxylated fatty acids or fatty alcohols; silicones, silicone esters.

7. Admixture according to any of preceding claims, wherein the defoamer is selected from tributyl phosphate and/or triisobutyl phosphate.

8. Admixture according to any of preceding claims, wherein the surfactant comprises a nonionic surfactant selected from ethoxylates, such as, for example, ethoxylated adducts of alcohols, such as polyoxyalkylene polyols; amines; fatty acids; fatty acid amides; alkylphenols; ethanolamides; fatty amines; polysiloxanes; fatty acid esters; alkyl or alkylphenyl polyglycol ethers, such as, for example, fatty alcohol polyglycol ethers; alkylglycosides; sugar esters; sorbitan esters; polysorbates or trialkylamine oxides; esters and amides of poly(meth)acrylic acids with polyalkylene glycols or aminopolyalkylene glycols, which at most may be tacked at one end with alkyl groups.

9. Admixture according to any of preceding claims, wherein the surfactant is a fatty acid polyglycol ester.

10. Admixture according to any of preceding claims whereby a pH of the admixture is < 7, in particular < 5, especially < 4.

11. Mineral binder composition comprising a mineral binder and an admixture according to any of preceding claims, whereby, with respect to the mineral binder in the composition, a proportion of the admixture is from 0.001 - 10 wt.%, especially 0.01 - 5 wt.%, in particular 0.1 - 2 wt.%.

12. Mineral binder composition according to claim 11, whereby the mineral binder composition is a self-compacting mineral binder composition, especially having a flow table spread, measured according to EN 12350-5:2019 of at least 500 mm, especially at least 600 mm, in particular at least 700 mm.

13. Method for producing an admixture according to any of claims 1-10 comprising the steps of
- Providing an aqueous emulsion of the alkali swellable polymer, preferably having a solid content of 10 - 40 wt.%, especially 25 - 35 wt.%, with respect to the weight of the emulsion;
- Mixing the aqueous emulsion of the alkali swellable polymer with the defoamer and/or the surfactant;
- Optionally adding the one or more processing additives;
- Optionally adding the water.

14. Use of an admixture according to any of claims 1 - 10 for reducing segregation and/or bleeding of a mineral binder composition, whereby the admixture comprises the defoamer with a proportion of 1 - 25 wt.%, especially 10 - 22 wt.%, in particular 14 - 19 wt.%.

15. Use of an admixture according to any of claims 1 - 10 as an air entrainer and/or as an air void stabilizer in a mineral binder composition, whereby the surfactant is present with a proportion of 0.01 - 25 wt.%, especially 0.5 - 5 wt.%, in particular 0.1 - 1 wt.%; and whereby the admixture comprises less than 1 wt.% of the defoamer, especially less than 0.1 wt.% of the defoamer, preferably no deformer.
